# EUROPÄISCHE PATENTSCHRIFT

(11) **EP 1 267 061 B1**
(45) Veröffentlichungstag und Bekanntmachung des Hinweises auf die Patenterteilung: **09.04.2008**
(21) Anmeldenummer: 02008376.2
(22) Anmeldetag: 12.04.2002
(51) Int. Cl.: F02D 41/22, F02D 41/14

(54) **Verfahren zur Diagnose einer Abgassonde**
Method for diagnosing an exhaust sensor
Procédé de diagnostic d'une sonde d'échappement

(30) Priorität: 15.06.2001 DE 10128969
(43) Veröffentlichungstag der Anmeldung: 18.12.2002
(73) Patentinhaber: AUDI AG, 85045 Ingolstadt (DE)
(72) Erfinder: Köhler, Armin, 85049 Ingolstadt (DE)
(74) Vertreter: Thielmann, Frank

(56) Entgegenhaltungen:
- US-A- 5 080 072
- US-A- 5 462 040
- US-A- 5 758 494
- US-A- 6 105 366
- US-A- 6 131 446
- US-B1- 6 192 310

## Beschreibung

Die Erfindung betrifft ein Verfahren zur Diagnose einer stromabwärts vom Katalysator angeordneten Führungssonde eines Systems zur Motorsteuerung. Es ist bekannt einen Katalysator zur Reinigung von Abgasen von Fahrzeugen, so beispielsweise einen Dreiwege-Katalysator, in einem Abgassystem eines Benzinmotors anzuordnen, um die Menge der Emissionen von schädlichen Gasen in die Atmosphäre zu verringern. Der Dreiwege-Katalysator oxidiert Kohlenwasserstoff und Kohlenmonoxid und desoxidiert Stickstoff-Oxide, wodurch das Abgas gereinigt wird. Die Oxidation und Desoxidation durch den Dreiwege-Katalysator findet jedoch nur ausreichend in einem engen Verhältnis von Luft und Kraftstoff statt. Dieser Bereich ist ein enges Fenster in der Nähe des stöchiometrischen Verhältnisses, bei dem der Kraftstoff im Idealfall zu Wasser und Kohlendioxid verbrennt. Das hierdurch beschriebene Verhältnis aus Luft und Kraftstoff beträgt 1 Kilogramm Kraftstoff auf 14,7 Kilogramm Luft. Durch die ständig wechselnde Anforderung an die Motorleistung während der Fahrt und auch aus anderen Gründen ist die ideale Zusammensetzung des Gemisches nicht einzuhalten. Das Verhältnis von Luft und Kraftstoff wird daher über einen Regelkreis ständig nachgeregelt, um nahe an dem stöchiometrischen Verhältnis von Luft und Kraftstoff zu liegen. Hierbei bedient man sich des Ausgangssignals eines Sensors, z.B. einer Lambdasonde, mit dem der Sauerstoffgehalt gemessen wird. Dieser Sensor ist in der Regel im Krümmer des Auspuffs angeordnet. Bei dieser Anordnung wird die Reinigungskapazität des Dreiwege-Katalysators am besten ausgenutzt.

Moderne Abgassysteme verfügen über einen oder mehrere Katalysatoren und zwei oder mehrere Sensoren, im folgenden auch als Sonden bezeichnet, wobei mindestens eine Sonde stromabwärts hinter einem Katalysator angeordnet ist.

Diese Sonde wird als Führungssonde oder Hinterkat-Sonde bezeichnet. Mittels dieser Führungssonde wird die Regelung des Gemisches im Zusammenspiel mit den anderen Sonden erheblich verbessert. Darüberhinaus bleibt die Führungssonde auch dann aktiv, wenn eine oder mehrere der motornahen Sonden aufgrund von zu fettem Gemisch vergiftet und damit zumindest solange nicht mehr funktionsfähig sind, bis die Motorsteuerung über die noch aktive Führungssonde das Luft-Kraftstoff-Verhältnis wieder in den gewünschten Bereich geregelt hat.

Die korrekte Arbeitsweise der Sonden ist von erheblichen Einfluß für die korrekte Wirkungsweise der Katalysatoren und die Reinigung des Abgase. In der DE-OS 19752965 wurde dementsprechend vorgeschlagen Maßnahmen zu treffen, durch welche die fehlerhafte Wirkungsweise einer Sonde ermittelt werden kann. Das in dieser Literaturstelle beschriebene Verfahren betrifft aber nur den stromaufwärts zum Katalysator befindlichen Sensor.

Ein weiteres Verfahren, das ebenfalls einen stromaufwärts zum Katalysator befindlichen Sensor betrifft, ist aus dem US Patent 5,080,072 bekannt. Dort werden obere und untere Werte vorgegeben, die zu einem Ausgangswert eines Abgassensors korrespondieren müssen und zwar bei einem Luft-Benzin Verhältnis dass größer bzw. kleiner ist als ein stöchiometrisches Verhältnis bei einem vorgegebenen Wert. Sind die an der Abgassonde gemessenen maximalen bzw. minimalen Werte größer bzw. kleiner als die vorgegebenen oberen und unteren Werte, so werden letztere gleich den gemessenen Werten gesetzt. Die Sonde wird als abnormal eingestuft, wenn die Differenz zwischen dem oberen und dem unteren vorgegebenen Wert kleiner ist als ein vorgegebener Referenzwert.

Die Erfindung geht dementsprechend aus von einem Verfahren zur Diagnose einer den Sauerstoffgehalt im Abgassystem einer Brennkraftmaschine detektierenden Sonde, wobei die Sonde als Führungssonde stromabwärts hinter mindestens einem Katalysator angeordnet ist.

Aufgabe der Erfindung ist es die stromabwärts zum Katalysator liegende Führungssonde auf ihre korrekte Arbeitsweise hin zu überwachen. Diese Aufgabe wird dadurch gelöst, daß während des Betriebes der Brennkraftmaschine der aktuelle Sondenwert permanent gemessen und die jeweils auftretenden Extremwerte als maximaler Sondenwert und minimaler Sondenwert gespeichert werden, wobei in einem Schwellenvergleichs-Verfahrensschritt die Differenz zwischen dem maximalen und minimalen Sondenwert gebildet und mit einem vorgegebenen Schwellenwert verglichen wird, wobei die Sonde als funktionsfähig diagnostiziert wird, wenn die Differenz größer ist als der vorgegebene Schwellenwert und das Diagnoseverfahren beendet werden kann oder bedarfsweise weitere Diagnoseschritte eingeleitet werden können. Diese weiteren Diagnoseschritte werden aber jedenfalls dann eingeleitet, wenn die Differenz kleiner ist als der vorgegebene Schwellenwert.

Die Erfindung besteht im Prinzip darin, zur Bewertung der Arbeitsweise der Führungssonde nach einem vorgegebenen Schema deren Meßwerte oder von diesen abgeleitete Hilfswerte mit geeignet ausgewählten Vergleichswerten zu vergleichen und in Abhängigkeit von dem Ergebnis des Vergleichs die Führungssonde zu bewerten. Die Bewertung kann durch elektronische Steuerungsmittel geschehen, die für die Regelung des Katalysators ohnedies benötigt werden. Die Erfindung ist nicht darauf beschränkt, nur einen einzigen Meßwert oder einen von diesem abgeleiteten Hilfswert mit geeignet ausgewählten Vergleichswerten zu vergleichen. Es können auch mehrere Meßwerte und/oder von diesen abgeleitete Werte mit zugeordneten Vergleichswerten gleichzeitig oder nacheinander verglichen werden. Die Auswahl der Werte und die Art der Bewertung hängt stark von dem gewählten Katalysator und dem eingesetzten Reinigungsverfahren ab.

Ein vorteilhafter weiterer Diagnoseschritt besteht darin, daß der maximale Sondenwert mit einem minimalen Sollwert verglichen wird, wobei der Sauerstoffgehalt im Abgas durch das Aufsteuern einer sogenannten Fettrampe reduziert wird wenn der maximale Sondenwert kleiner ist als der minimale Sollwert und daß, wenn der nach der Reduzierung des Sauerstoffgehaltes gemessene aktuelle Sondenwert kleiner ist als ein maximaler Sollwert, der Sensor als defekt diagnostiziert wird oder, wenn der nach der Reduzierung des Sauerstoffgehaltes gemessene aktuelle Sondenwert größer ist als ein maximaler Sollwert der Sensor als "in Ordnung" diagnostiziert wird.

Wenn allerdings der maximale Sondenwert größer ist als der minimale Sollwert dann besteht der vorteilhafte weitere Verfahrensschritt darin, daß der Sauerstoffgehalt im Abgas durch das Aufsteuern einer sogenannten Magerrampe erhöht wird, wobei der Sensor als defekt diagnostiziert wird, wenn der nach der Erhöhung des Sauerstoffgehaltes gemessene aktuelle Sondenwert größer ist als der minimalen Sollwert. Ist jedoch der nach der Erhöhung des Sauerstoffgehaltes gemessene aktuelle Sondenwert kleiner ist als der minimale Sollwert, dann wird der maximale Sondenwert mit einem maximalen Sollwert verglichen und, wenn der maximale Sondenwert größer ist als der maximale Sollwert, wird der Sensor als "in Ordnung" diagnostiziert, wohingegen, die Verfahrensschritte gemäß Anspruch 2 durchgeführt werden, wenn der maximale Sondenwert kleiner ist als der maximale Sollwert.

Die beschriebenen, vorteilhaften weiteren Verfahrensschritte führen zwar zu einer sicheren Diagnose der Führungssonde sind aber etwas aufwendig. Deshalb kann durch Vorschalten eines Auswertekriteriums die Diagnose bereits vorzeitig beendet werden. Dieses Verfahren ist Gegenstand von Anspruch 4.

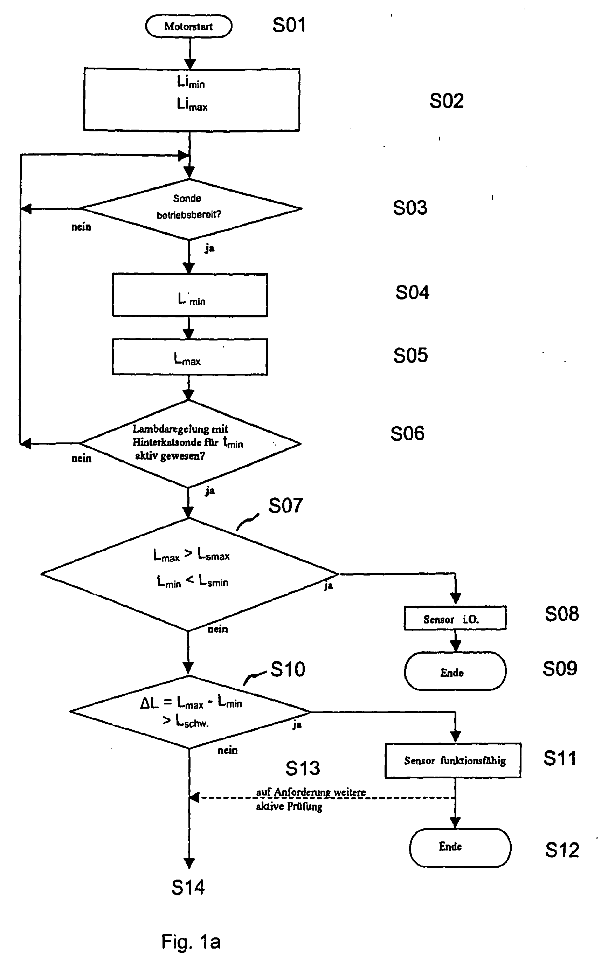

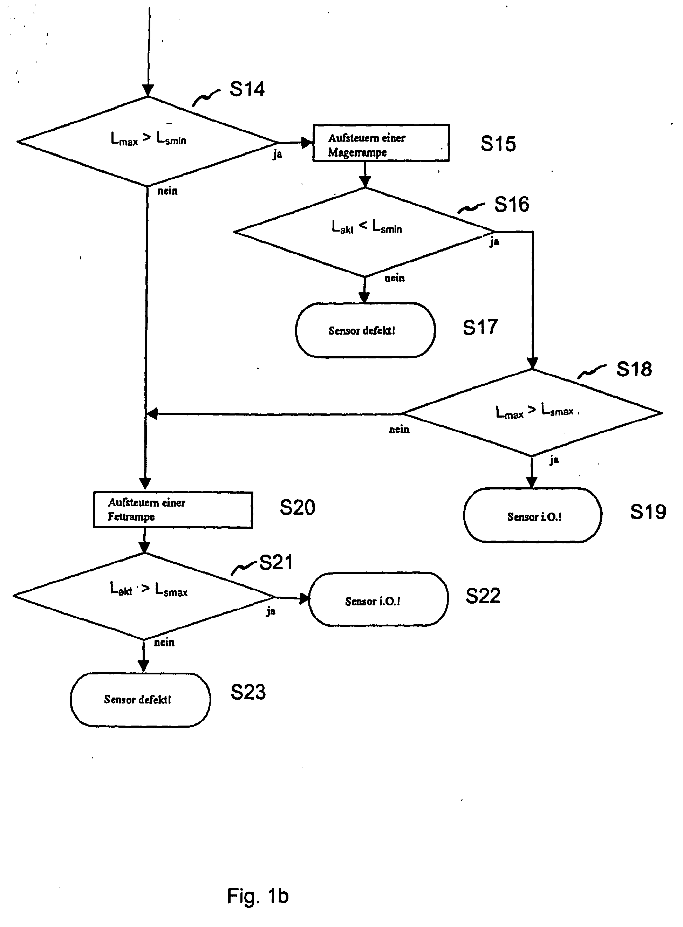

Ein Ausführungsbeispiel der Erfindung wird nachfolgend anhand der Zeichnung erläutert. Dabei setzt sich die Zeichnung aus den Figuren 1a und 1b zusammen, die die einzelnen nacheinander erfolgenden Diagnoseschritte darstellen. Die einzelnen Schritte können selbstverständlich im Rahmen der Erfindung auch in anderer Zusammensetzung nacheinander durchgeführt werden. Die beschriebene Ausführungsform ist nur als Beispiel zu werten und die dargestellten Schritte zeigen nur einzelne mögliche Bewertungen der Sonde, die auch in anderer Form kombiniert werden können. Es ist festzuhalten, daß bei dem vorliegenden Beispiel davon ausgegangen wird, daß bei fetterem Gemisch die Führungssonde einen höheren Meßwert abgibt als bei mageren Gemisch. Selbstverständlich kann durch Verwendung geeigneter Verstärker die Führungssonde auch derart eingestellt werden, daß sie bei einem wachsenden Sauerstoffgehalt der gereinigten Abgase (mageres Gemisch) einen größeren Meßwert abgibt. In diesem Falle sind die in der Beschreibung erläuterten Beispiele analog abzuändern. Bei der nachfolgenden Beschreibung wird auf die Numerierung der einzelnen Schritte in der Zeichnung Bezug genommen.

S01: Die Regelung setzt erst nach dem Start des Motors ein. Dabei bedeutet Motorstart einen Zeitpunkt, bei dem der Motor schon sinnvoll geregelt werden kann. Hierbei muß der Motor schon eine geeignete Temperatur erreicht haben, da der Regelkreis auf einen Temperaturwert eingestellt ist, der der üblichen Arbeitstemperatur des Motors entspricht. Der Beginn der nachfolgenden Messungen ist also auch durch außerhalb des Regelvorgangs liegende Parameter wie beispielsweise die Temperatur des Kühlwassers oder durch andere Größen festgelegt, die anzeigen, daß der Motor seine normale Arbeitstemperatur erreicht hat, in der die vorschriftsmäßige Arbeitsweise des Regelkreises erwartet werden kann.

S02: nachdem der Motor gestartet wurde, wird gemäß der obigen Definition der minimale Sensorwert und der maximale Sensorwert als Anfangswert initialisiert d.h. auf Anfangswert gesetzt. Dabei werden der maximale Sensorwert und der minimale Sensorwert bevorzugt auf Werte gesetzt, die von den Meßdaten der zu überprüfenden Führungssonde mit großer Wahrscheinlichkeit überschritten werden, soweit sie überhaupt arbeitsfähig ist. Der minimale Sensorwert kann beispielsweise auf den maximalen Sollwert initialisiert werden während der maximale Sensorwert zum Beispiel auf den minimalen Sollwert initialisiert werden kann. Selbstverständlich können die gewählten Anfangswerte auch weiter zu Werten hin verschoben sein, die als minimaler und maximaler Sensorwert realistisch erwartet werden. Die Werte können aber auch der obere und der untere Wert des Meßbereichs des Sonsors sein. Der Sinn in der Festlegung des minimalen Sensorwertes und des maximalen Sensorwertes besteht im Kern nur darin, feststellen zu können, ob der Sensor überhaupt reagiert beziehungsweise arbeitet.

S03 : Die Feststellung, ob der zu überprüfende Führungssensor betriebsbereit ist, geschieht dann im vorliegenden Schritt. Dazu ist es notwendig, daß bei einem beheizten Sensor die Heizung für eine Mindestzeit eingeschaltet war. Falls der Sensor kein eigenes Heizelemet besitzt, ist die Temperatur des Sensors aufgrund der Motorbetriebszustände nachzubilden und nach überschreiten einer Mindesttemperatur für eine bestimmte Zeit wird der Sensor als betriebsbereit erkannt. Zusätzlich muß sichergestellt sein, daß die Sonde elektrisch funktioniert, d.h. daß sie Strom zieht und daß der Heizkreis der Sonde aktiv ist. Weiter soll sich auch die Brennkraftmaschine in einem Betriebspunkt befinden, der eine vernünftige Regelung erlaubt. Weiter oben wurde erläutert, daß die Lambda-Sonden auf den Gehalt von Sauerstoff in den Kraftstoff-Gemisch bzw. dem Abgas des Motors ansprechen und eine Spannung abgeben, die von dem Sauerstoffgehalt in dem Gemisch bzw. dem Abgase abhängig ist. Liegt der gemessene (bzw. später minimale und maximale gemessene, S04, S05) Sensorwert unterhalb bzw. oberhalb des entsprechenden initialisierten Anfangswertes so werden die Messungen und der Vergleich fortgesetzt bis festgestellt wird, daß der gemessene (bzw. später minimale gemessene) Wert oberhalb des festgelegten zugehörigen Anfangswertes liegt und der gemessene (bzw. später maximale gemessene) Werte unterhalb des festgelegten zugehörigen Anfangswertes liegt.

Selbstverständlich kann bei dem hier vorgeschlagenen Meßverfahren festgelegt werden, daß die Überprüfung der Sensorwerte nach einem bestimmten Zeitpunkt abgebrochen wird und dem Fahrer beispielsweise zusätzlich noch eine entsprechende Anzeige zur Verfügung gestellt wird. Jedenfalls wird man dann die Führungssonde innerhalb des Regelkreises als schadhaft markieren, so daß die Regelung entweder vollkommen abgebrochen wird oder das Signal der Führungssonde innerhalb des Regelkreis nicht bewertet wird.

S04, S05: Hat man wie beschrieben festgestellt, daß die Führungssonde betriebsbereit ist, so werden die tatsächlich gemessenen Sensorwerte registriert. Der bisher gemessene größte und der bisher gemessene niedrigste Sensorwert werden als minimaler Sensorwert Lmin und maximaler Sensorwert Lₘₐₓ jeweils solange gespeichert bis sie von weiteren größeren oder niedrigeren Meßwerten abgelöst werden.

S06: Anschließend wird geprüft, ob die Lambdaregelung mit der Führungssonde (Hinterkat-Sonde) für eine Mindestzeit von tₘᵢₙ aktiv gewesen ist. Ist dies nicht der Fall, so wird der Schritt S03 wiederholt. Stellt man fest, daß die Sonde weiterhin betriebsbereit ist, so wird in den Schritten S04, S05 erneut auf den bisher aufgetretenen niedrigsten und den bisher aufgetretenen höchsten Sensorwert überprüft und der neue höchste oder niedrigste Wert festgehalten, falls ein derartiger Wert gemessen wird. Ist die in dem Schritt S06 gemessene Zeit noch nicht abgelaufen, so werden die Schritte S03 bis S06 solange wiederholt, bis die in S06 gemessene Zeit abgelaufen ist. Der im Schritt S06 festgelegte Zeitraum tₘᵢₙ bestimmt sich durch die Trägheit der Führungssonde, die relativ langsam in die Regelung eingreifen soll und damit eine gewisse integrierende Wirkung hat. Der Zeitraum kann etwa 2 Minuten betragen.

S07: Ist der Zeitraum abgelaufen und war die Lambdaregelung für den Zeitraum tₘᵢₙ aktiv, so wird in dem Schritt S07 geprüft, ob der maximale Sensorwert Lₘₐₓ aus S05 und der minimale Sensorwert Lmin aus S04 größer bzw. kleiner als die jeweiligen extremen Sollwerte sind. Ist das der Fall, so läßt sich sagen, daß die Sonde plausible Werte anzeigt. Werden also beide Bedingungen nach S07 erfüllt, so wird der Sensor gemäß dem Schritt S08 als "in Ordnung" eingestuft und die Überprüfung der Führungssonde ist gemäß S09 abgeschlossen. Der Schritt S07 ist nicht unbedingt notwendiger Bestandteil des Diagnoseverfahrens. Mit ihm kann aber das Verfahren erheblich abgekürzt werden, wenn der Sensor "in Ordnung" ist.

S10: Werden durch die innerhalb des Zeitraums tₘᵢₙ gemessenen maximalen bzw. minimalen Istwerte L_{min,} Lₘₐₓ die jeweiligen extremen Sollwerte Ls_{max,} Lsₘᵢₙ nicht über- beziehungsweise unterschritten, so kann die Führungssonde gleichwohl in Ordnung sein. Dies wird durch einen Vergleich der Differenz des maximalen und minimalen Sensorwertes ΔL = Lₘₐₓ - Lₘᵢₙ mit einem vorgegebenen Schwellenwert L_{schw} festgestellt. Die Differenz ΔL muß größer sein als der Schwellenwert L_{schw}, falls die Hinterkat-Sonde funktionstüchtig ist. Mit der Größe dieser Schwelle läßt sich auch die Diagnoseschärfe des Verfahrens einstellen. Ein Schwellenwert mit dem eine sinnvolle Diagnose möglich ist, liegt bei etwa 50 % des Hubes der Sonde.

S11: Ist die Differenz aus dem während eines Zeitraums tₘᵢₙ gemessenen maximalen und minimalen Meßwerts größer als eine sinnvoll festgelegte Schwelle, so wird in dem Schritt S11 definiert, daß die Führungssonde funktionsfähig ist. Diese Definition sagt nur aus, daß die Sonde hinreichend unterschiedliche Werte gemessen hat. Sie sagt aber nichts darüber aus, in welchem Bereich die gemessenen Werte gelegen haben. So ist es beispielsweise denkbar, daß die Sonde durch Alterung oder Verschmutzung den Ausgabebereich ihrer Meßwerte verschoben hat. Diese Tatsache kann für die Regelung von erheblichem Nachteil sein. Es kann somit ein Schritt S13 eingefügt werden, in welchen näher bestimmt wird, ob die Sonde nicht nur funktionsfähig, sondern tatsächlich "in Ordnung" ist oder nicht. Verzichtet man auf den zuletzt genannten Schritt S13, so ist mit dem folgenden Schritt S12 die Überprüfung der Hinterkat-Sonde beendet.

Liegt bei dem Schritt S10 die Differenz ΔL der gemessenen Extremwerte Lₘₐₓ - Lₘᵢₙ unterhalb einer sinnvollen Schwelle, so kann das den Grund haben, daß die Schwankungen des Gehalts an Sauerstoff in den Abgasen des Motors extrem gering waren. Diese Tatsache schließt nicht aus, daß die Hinterkat-Sonde ordnungsgemäß arbeitet. Es ist auch denkbar, daß die Gaszufuhr zu dem Motor durch die vor dem Katalysator liegende Regelung gestimmt hat. In diesem Fall kann nicht erwartet werden, daß die durch die Führungssonde gemessenen Werte schwanken. Ein weiterer wichtiger Schritt bei der Überprüfung der Führungssonde besteht in diesem Fall nun darin, eine gezielte Änderung in dem Gemisch zu veranlassen und dann zu überprüfen, wie die Führungssonde darauf reagiert.

S14: In diesem Schritt wird überprüft, ob der maximale gemessene Sensorwert Lₘₐₓ größer ist als der minimale Sollwert Lsₘᵢₙ. Mit anderen Worten heißt dies, das geprüft wird, ob das durch die Führungssonde festgestellte fetteste Gemisch fetter war als der festgelegte magerste Zustand des Gemischs. Ist das der Fall, so wird in dem Schritt S15 in die Zusammensetzung des dem Motor zugeführten Gasgemischs zu Zwecken der weiteren Prüfung eingegriffen. In dem Schritt S15 wird hierzu eine Magerrampe aufgesteuert. Wenn die Hinterkat-Sonde ordnungsgemäß arbeitet muß sich dies durch ihre geänderten Meßwerte äußern, das heißt, der Meßwert muß um einen bestimmten Betrag sinken.

S16: In diesen Schritt wird somit gemessen, ob der aktuell durch die Führungssonde festgestellte Meßwert Lₐₖₜ kleiner ist als der kleinste Sollwert Lsₘᵢₙ. Ist das nicht der Fall, so ist offensichtlich der vorher geltende Meßwert so hoch gewesen, daß er trotz der Magerrampe nicht unterhalb Lsₘᵢₙ gebracht werden konnte. Das deutet auf eine hohe Verschiebung der vorher aktuell ausgegebenen Werte in den fetten Bereich hin oder aber auch darauf, daß die Anwendung der Magerrampe auf die Ausgabewerte der Führungssonde keine hinreichende Wirkung gezeigt hat.

S17: Aus den genannten Gründen wird daher der Sensor als defekt eingestuft, wenn der aktuelle Sensorwert Lₐₖₜ in S16 größer als der kleinste Sollwert Lsₘᵢₙ ist. Damit wird an dieser Stelle die Überprüfung der Führungssonde abgeschlossen.

S18: Ist aber nach dem Aufsteuern der Magerrampe im Schritt S15 der aktuelle Sensorwert Lₐₖₜ kleiner als der kleinste Sollwert Lsₘᵢₙ, dann muß überprüft werden, ob die Sonde in der Lage ist, auch fettes Gemisch zu detektieren, oder ob die Sonde nur in einem eingeschränkten Bereich betriebsfähig ist. Das geschieht im Schritt S18, indem untersucht wird, ob der gespeicherte maximale Sensorwert Lₘₐₓ (siehe S05) größer ist als der maximale Sollwert Lsₘₐₓ. Ist dies der Fall, dann ist die vorherige Messung offensichtlich von einem vergleichsweise hohen Niveau ausgegangen und die Magerrampe hat die erwünschte Wirkung gezeigt. Die Führungssonde wird damit als "in Ordnung" eingestuft und die Diagnose der Sonde ist beendet.

S20: Geht die Überprüfung nach S18 negativ aus, und ist bei dieser Bewertung der maximale Sensorwert Lₘₐₓ kleiner als der größte Sollwert Lsₘₐₓ, so wird in dem Schritt S20 zu Prüfzwecken dem System eine Fettrampe "aufgesteuert" und danach in S21 das Verhalten der Führungssonde bewertet. Die Fettrampe führt dazu, daß der von der Führungssonde abgegebene Meßwert steigen müßte. Es ist daher in S21 zu überprüfen, welchen Einfluß die Fettrampe auf den aktuellen Ausgabewert der Sonde nimmt.

S21: Wird bei der Bewertung nach S21 festgestellt, daß der dann gemessene aktuelle Sensorwert Lₐₖₜ größer ist als der größte Sollwert Lsₘₐₓ, so hat die Fettrampe offensichtlich dazu geführt, daß der aktuelle Sensorwert von unterhalb des minimalen Sollwertes Lsₘᵢₙ (S16) auf einen Wert oberhalb des größten Sollwertes Lsₘₐₓ angehoben wurde. In diesem Fall wird der Sensor als "in Ordnung" eingestuft und die Prüfung ist mit dem Schritt S22 beendet. Hinzu kommt, daß durch die Magerrampe (in S15) der Sensorwert von einem oberhalb des kleinsten Sollwertes Lsₘᵢₙ liegenden maximalen Sensorwert Lₘₐₓ auf einen unterhalb des kleinsten Sollwertes liegenden aktuellen Wert gebracht wurde. Das läßt darauf schließen, daß die Ausgangswerte des Sensors der Änderung in der Zusammensetzung des Gemisches hinreichend folgen.

Ist aber die Fettrampe nicht in der Lage den aktuellen Sensorwert Lₐₖₜ über den größten Sollwert Lsₘₐₓ anzuheben, so wird die Führungssonde als defekt eingestuft und mit dem Schritt S23 ist die Prüfung der Sonde beendet. Dieses Ergebnis ist schlüssig, da der zugehörige maximale Sollwert offensichtlich vorher schon relativ klein war, weil er in S18 unterhalb des größten Sollwertes lag. Daß die Magerrampe S15 in der Lage war den maximalen Sensorwert Lₘₐₓ in einen aktuellen Sensorwert Lₐₖₜ herunter zu führen, der unterhalb des kleinsten Sollwertes Lsₘᵢₙ liegt, kann daran liegen, daß der Ausgangswert des Sensors sich nur wenig oberhalb des kleinsten Sollwertes Lsₘᵢₙ befand, so daß eine geringfügige Verminderung des Sensorwertes ausreichte, um unterhalb des kleinsten Sollwertes Lsₘᵢₙ zu gelangen.

Nun muß noch der Fall bewertet werden, daß in Schritt S14 der maximale Sensorwert Lₘₐₓ unterhalb des kleinsten Sollwertes Lsₘᵢₙ liegt. In diesem Fall ist es offensichtlich wenig sinnvoll das Gemisch mit einer Magerrampe anzusteuern, die den Ausgangswert des Sensors noch verkleinert. Man steuert daher in diesem Fall gleich eine Fettrampe (S20) auf, die den Ausgangswert des Sensors anhebt. Gelangt hierdurch der aktuelle Ausgangswert Lₐₖₜ des Sensors über den größten Sollwert Lsₘₐₓ so wird der Sensor als "in Ordnung" eingestuft, da er durch die Fettrampe von unterhalb des kleinsten Sollwertes Lsₘᵢₙ auf oberhalb des größten Sollwertes Lsₘₐₓ geführt werden konnte.

S21: Wird bei der Bewertung nach Schritt S21 festgestellt, daß der dann gemessene aktuelle Sensorwert Lₐₖₜ größer ist als der größte Sollwert Lsₘₐₓ, so daß bedeutet dies, daß der Sensor auf das fette Gemisch ausreichend angesprochen hat. In diesem Fall wird der Sensor als "in Ordnung" eingestuft und die Diagnose ist mit dem Schritt S22 beendet.

Ist aber die Fettrampe nicht in der Lage den aktuellen Sensorwerte Lₐₖₜ über den größten Sollwert Lsₘₐₓ anzuheben, so wird die Führungssonde als defekt eingestuft und mit dem Schritt S23 ist die Diagnose der Sonde beendet. Dieses Ergebnis ist schlüssig, da der zugehörige maximale Sensorwert Lₘₐₓ offensichtlich vorher schon relativ klein war, weil er in S14 unterhalb des kleineren Sollwertes Lsₘᵢₙ lag.

Abschließend sei nochmals erwähnt, daß durch die Wahl der bei dem Verfahren verwendeten Soll- und Schwellenwerte die Diagnoseschärfe des Verfahrens eingestellt werden kann. In der Praxis können die Werte so gewählt werden, daß noch eine Sonde diagnostizierbar ist, die bereits relativ langsam ist und nur noch in einem schmalen Band bzw. in einem engen Wertebereich reagiert. Erfahrungsgemäß reicht für die Schritte S15 und S20 ein zehnprozentiges "Abmagern" oder "Anfetten" des Gemisches aus, um die Sonde in den jeweils anderen, d.h. "mageren" oder "fetten" Bereich zu bringen.

## Patentansprüche

1. Verfahren zur Diagnose einer den Sauerstoffgehalt im Abgassystem einer Brennkraftmaschine detektierenden Sonde, wobei die Sonde als Führungssonde stromabwärts hinter mindestens einem Katalysator angeordnet ist, **gekennzeichnet durch** folgende Verfahrensschritte:
1.1. während des Betriebes der Brennkraftmaschine wird der aktuelle Sondenwert (Lₐₖₜ) permanent gemessen und die jeweils auftretenden Extremwerte als maximaler Sondenwert (Lₘₐₓ) und minimaler Sondenwert (Lₘᵢₙ) gespeichert,
1.2. in einem Schwellenvergleichs-Verfahrensschritt (S10) wird die Differenz (ΔL) zwischen dem maximalen und minimalen Sondenwert (Lₘₐₓ - Lₘᵢₙ) gebildet und mit einem vorgegebenen Schwellenwert (L_{schw}) verglichen,
1.3. wenn die Differenz (ΔL) größer ist als der vorgegebene Schwellenwert (L_{schw}) wird die Sonde als funktionsfähig diagnostiziert und das Diagnoseverfahren beendet oder
1.4. es werden bedarfsweise weitere Diagnoseschritte eingeleitet,
1.5. die weiteren Diagnoseschritte werden auch dann eingeleitet, wenn die Differenz (ΔL) kleiner ist als der vorgegebene Schwellenwert (L_{schw}).

2. Verfahren nach Anspruch 1, **dadurch gekennzeichnet, daß** ein weiterer Diagnoseschritt aus folgenden Schritten besteht:
2.1. Der maximale Sondenwert (Lₘₐₓ) wird mit einem minimalen Sollwert (Lsₘᵢₙ) verglichen (S14), wobei der Sauerstoffgehalt im Abgas reduziert wird (S20) wenn der maximale Sondenwert (Lₘₐₓ) kleiner ist als der minimale Sollwert (Lsₘᵢₙ),
2.2. wenn der nach der Reduzierung des Sauerstoffgehaltes gemessene aktuelle Sondenwert (Lₐₖₜ) kleiner ist als ein maximaler Sollwert (Lsₘᵢₙ) wird der Sensor als defekt diagnostiziert,
2.3. wenn der nach der Reduzierung des Sauerstoffgehaltes gemessene aktuelle Sondenwert (Lₐₖₜ) größer ist als ein maximaler Sollwert (Lsₘₐₓ) wird der Sensor als "in Ordnung" diagnostiziert,

3. Verfahren nach Anspruch 1, **dadurch gekennzeichnet, daß** ein weiterer Diagnoseschritt aus folgenden Schritten besteht:
3.1. der maximale Sondenwert (Lₘₐₓ) wird mit einem minimalen Sollwert (Lsₘᵢₙ) verglichen (S14), wobei der Sauerstoffgehalt im Abgas erhöht wird (S15) wenn der maximale Sondenwert (Lₘₐₓ) größer ist als der minimale Sollwert (Lsₘᵢₙ),
3.2. wenn der nach der Erhöhung des Sauerstoffgehaltes gemessene aktuelle Sondenwert (Lₐₖₜ) größer ist als der minimalen Sollwert (Lsₘᵢₙ) wird der Sensor als defekt diagnostiziert,
3.3. wenn der nach der Erhöhung des Sauerstoffgehaltes gemessene aktuelle Sondenwert (Lₐₖₜ) kleiner ist als der minimalen Sollwert (Lsₘᵢₙ) wird der maximale Sondenwert (Lₘₐₓ) mit einem maximalen Sollwert (Lsₘₐₓ) verglichen (S18),
3.4. wenn der maximale Sondenwert (Lₘₐₓ) größer ist als der maximale Sollwert (Lsₘₐₓ) wird der Sensor als "in Ordnung" diagnostiziert,
3.5. wenn der maximale Sondenwert (Lₘₐₓ) kleiner ist als der maximale Sollwert (Lsₘₐₓ) werden die Verfahrensschritte gemäß Anspruch 2 durchgeführt.

4. Verfahren nach Anspruch 1, **dadurch gekennzeichnet, dass** nach dem Verfahrensschritt 1.1 folgende Verfahrensschritte durchgeführt werden:
4.1. der maximale Sondenwert (Lmax) wird mit einem maximalen Sollwert (Lsmax) und der minimale Sondenwert (Lmin) wird mit einem minimalen Sollwert (Lsmin) verglichen,
4.2. wenn der maximale Sondenwert (Lmax) größer ist als der maximale Sollwert (Lsmax) und der minimale Sondenwert (Lₘᵢₙ)kleiner ist als der minimale Sollwert (Lsmin)wird die Führungssonde wird als "In Ordnung" diagnostiziert,
4.3. wenn der maximale Sondenwert (Lmax) kleiner ist als der maximale Sollwert (Lsₘₐₓ) oder der minimale Sondenwert (Lₘᵢₙ) größer ist als der minimale Sollwert (Lsₘᵢₙ) wird das Verfahren bei Schritt 1.2 fortgesetzt.

## Claims

1. Process for the diagnosis of a sensor that detects the oxygen level in the exhaust gas system of an internal combustion engine, the sensor as a reference sensor being positioned downstream behind at least one catalytic converter, **characterised by** the following process steps:
1.1 when the internal combustion engine is running, the current sensor level (L_{curr}) is continuously measured and the extreme values that occur are stored as the maximum sensor value (Lₘₐₓ) and minimum sensor value (Lₘᵢₙ),
1.2 in a threshold comparison process step (S10), the difference (ΔL) between the maximum and minimum sensor value (Lₘₐₓ - Lₘᵢₙ) is formed and compared with a predefined threshold value (Lₜₕᵣₑₛₕ),
1.3 if the difference (ΔL) is greater than the predefined threshold value (Lₜₕᵣₑₛₕ), the sensor is diagnosed as operational and the diagnostic process is terminated or
1.4 further diagnostic steps are initiated if necessary,
1.5 the further diagnostic steps are also initiated if the difference (ΔL) is less than the predefined threshold value (Lₜₕᵣₑₛₕ).

2. Process according to claim 1, **characterised in that** a further diagnostic step consists of the following steps:
2.1 the maximum sensor value (Lₘₐₓ) is compared with a minimum setpoint value (Lsₘᵢₙ) (S14), the oxygen level in the exhaust gas being reduced (S20) if the maximum sensor value (Lₘₐₓ) is less than the minimum setpoint value (Lsₘᵢₙ),
2.2 if the current sensor value (L_{curr}) measured after reducing the oxygen level is less than a maximum setpoint value (Lsₘᵢₙ), the sensor is diagnosed as defective,
2.3 if the current sensor value (L_{curr}) measured after reducing the oxygen level is greater than a maximum setpoint value (LSₘₐₓ), the sensor is diagnosed as "OK".

3. Process according to claim 1, **characterised in that** a further diagnostic step consists of the following steps:
3.1 the maximum sensor value (Lₘₐₓ) is compared with a minimum setpoint value (Lsₘᵢₙ) (S14), the oxygen level in the exhaust gas being increased (S15) if the maximum sensor value (Lₘₐₓ) is greater than the minimum setpoint value (Lsₘᵢₙ),
3.2 if the current sensor value (L_{curr}) measured after increasing the oxygen level is greater than the minimum setpoint value (Lsₘᵢₙ), the sensor is diagnosed as defective,
3.3 if the current sensor value (L_{curr}) measured after increasing the oxygen level is less than the minimum setpoint value (Lsₘᵢₙ), the maximum sensor value (Lₘₐₓ) is compared with a maximum setpoint value (Lsₘₐₓ) (S18),
3.4 if the maximum sensor value (Lₘₐₓ) is greater than the maximum setpoint value (Lsₘₐₓ), the sensor is diagnosed as "OK",
3.5 if the maximum sensor value (Lₘₐₓ) is less than the maximum setpoint value (Lsₘₐₓ), the process steps according to claim 2 are performed.

4. Process according to claim 1, **characterised in that** after process step 1.1 the following process steps are performed:
4.1 the maximum sensor value (Lₘₐₓ) is compared with a maximum setpoint value (Lsₘₐₓ) and the minimum sensor value (Lₘᵢₙ) is compared with a minimum setpoint value (Lsₘᵢₙ),
4.2 if the maximum sensor value (Lₘₐₓ) is greater than the maximum setpoint value (Lsₘₐₓ) and the minimum sensor value (Lₘᵢₙ) is less than the minimum setpoint value (Lsₘᵢₙ), the reference sensor is diagnosed as "OK".
4.3 if the maximum sensor value (Lₘₐₓ) is less than the maximum setpoint value (Lsₘₐₓ) or the minimum sensor value (Lₘᵢₙ) is greater than the minimum setpoint value (Lsₘᵢₙ), the process is continued from step 1.2.

## Revendications

1. Procédé de diagnostic d'une sonde détectant la teneur en oxygène dans le système d'échappement d'un moteur à combustion interne, la sonde étant disposée comme sonde de guidage en aval derrière au moins un catalyseur, **caractérisé par** les étapes de procédé suivantes :
1.1. pendant le fonctionnement du moteur à combustion interne, la valeur de sonde actuelle (Lₐₖₜ) est mesurée en permanence et les valeurs extrêmes apparaissant respectivement sont mémorisées comme valeur de sonde maximale (Lₘₐₓ) et valeur de sonde minimale (Lₘᵢₙ),
1.2. la différence (ΔL) entre la valeur de sonde maximale et la valeur de sonde minimale (Lₘₐₓ-Lₘᵢₙ) est formée au cours d'une étape de procédé de comparaison des seuils (S10) et comparée à une valeur seuil prédéfinie (L_{schw}),
1.3. lorsque la différence (ΔL) est supérieure à la valeur seuil prédéfinie (L_{schw}), la sonde est diagnostiquée comme étant opérationnelle et on met fin au procédé de diagnostic ou
1.4. d'autres étapes de diagnostic sont activées en cas de besoin,
1.5. les autres étapes de diagnostic sont alors également activées lorsque la différence (ΔL) est inférieure à la valeur seuil prédéfinie (L_{schw}).

2. Procédé selon la revendication 1, **caractérisé en ce qu'**une autre étape de diagnostic est constituée par les étapes suivantes :
2.1. la valeur de sonde maximale (Lₘₐₓ) est comparée à une valeur seuil minimale (LSₘᵢₙ) (S14), la teneur en oxygène dans les gaz d'échappement étant réduite (S20) lorsque la valeur de sonde maximale (Lₘₐₓ) est inférieure à la valeur seuil minimale (LSₘᵢₙ),
2.2. lorsque la valeur de sonde actuelle (Lₐₖₜ) mesurée après la réduction de la teneur en oxygène est inférieure à une valeur seuil maximale (LSₘᵢₙ), le détecteur est diagnostiqué comme étant défectueux,
2.3. lorsque la valeur de sonde actuelle (Lₐₖₜ) mesurée après la réduction de la teneur en oxygène est supérieure à une valeur seuil maximale (LSₘₐₓ), le détecteur est diagnostiqué comme étant « en règle ».

3. Procédé selon la revendication 1, **caractérisé en ce qu'**une autre étape de diagnostic est constituée par les étapes suivantes :
3.1. la valeur de sonde maximale (Lₘₐₓ) est comparée à une valeur seuil minimale (LSₘᵢₙ) (S14), la teneur en oxygène dans les gaz d'échappement étant augmentée (S15) lorsque la valeur de sonde maximale (Lₘₐₓ) est supérieure à la valeur de sonde minimale (LSₘᵢₙ),
3.2. lorsque la valeur de sonde actuelle (Lₐₖₜ) mesurée après l'augmentation de la teneur en oxygène est supérieure à la valeur seuil minimale (LSₘᵢₙ), le détecteur est diagnostiqué comme étant défectueux,
3.3. lorsque la valeur de sonde actuelle (Lₐₖₜ) mesurée après l'augmentation de la teneur en oxygène est inférieure à la valeur seuil minimale (LSₘᵢₙ), la valeur de sonde maximale (Lₘₐₓ) est comparée à une valeur seuil maximale (LSₘₐₓ) (S18),
3.4. lorsque la valeur de sonde maximale (Lₘₐₓ) est supérieure à la valeur seuil maximale (LSₘₐₓ), le détecteur est diagnostiqué comme étant « en règle »,
3.5. lorsque la valeur de sonde maximale (Lₘₐₓ) est inférieure à la valeur seuil maximale (LSₘₐₓ), les étapes de procédé sont réalisées selon la revendication 2.

4. Procédé selon la revendication 1, **caractérisé en ce qu'**après l'étape de procédé 1.1, les étapes de procédé suivantes sont réalisées :
4.1. la valeur de sonde maximale (Lmax) est comparée à une valeur seuil maximale (Lsmax) et la valeur de sonde minimale (Lmin) est comparée à une valeur seuil minimale (Lsmin),
4.2. lorsque la valeur de sonde maximale (Lmax) est supérieure à la valeur seuil maximale (Lsmax) et que la valeur de sonde minimale (Lmin) est inférieure à la valeur seuil minimale (Lsmin), la sonde de guidage est diagnostiquée comme étant « en règle »,
4.3. lorsque la valeur de sonde maximale (Lmax) est inférieure à la valeur seuil maximale (Lsmax) ou que la valeur de sonde minimale (Lmin) est supérieure à la valeur seuil minimale (Lsmin), le procédé se poursuit à l'étape 1.2.
